# EUROPEAN PATENT APPLICATION

(11) **EP 2 527 864 A1**
(43) Date of publication of application: **28.11.2012**
(21) Application number: 12167987.2
(22) Date of filing: 15.05.2012
(51) Int. Cl.: G01S 7/06, G01S 7/22, G01S 7/62

(54) **Sensor image display device and method**

(30) Priority: 27.05.2011 JP 2011119667
(71) Applicant: Furuno Electric Company Limited, Hyogo (JP)
(72) Inventor: Iseri, Kensuke, Nishinomiya, Hyogo (JP)
(74) Representative: Arrowsmith, Peter Michael E.

(57) **Abstract**

This disclosure provides a sensor image display device, which includes a display unit configured to display a sensor image generated based on a signal acquired by a sensor, a selection user interface for allowing a user to select a partial area from an area where the sensor image is displayed, and a sensor image generator for generating the sensor image by performing different signal processing for the selected area and one or more areas other than the selected area.

## Description

### Technical Field

The present invention relates to a sensor image display device and method which generates and displays a radar image, and radar device including the graphic display device.

### Background of the Invention

Conventionally, as disclosed in JP62-105071A, JP62-105072A, JP62-201384A, JP3131450, and JP2006-300722A, radar devices which generate and display a radar image based on an echo signal received from two or more radar antennas, have been known.

Radar devices disclosed in JP62-105071A, JP62-105072A, and JP62-201384A are provided with two radar antennas, through which two kinds of echo signals are inputted into a radar indicator. The radar devices generate a radar image based on the inputted echo signal, respectively. The radar devices then synthesize a part indicative of a predetermined area of one of the radar images and a part indicative of other areas of the other radar image to generate the radar image to be displayed.

JP3131450 discloses a radar device having such a configuration that the radar images generated based on two radar antennas, respectively, are outputted alternately per pixel to generate a radar image to be displayed.

JP2006-300722A discloses a radar device which generates a radar image centering on a ship concerned based on two radar antennas, respectively. A user can specify a predetermined area by specifying a distance from the ship or an azimuth seen from the ship. This radar device generates a radar image to be displayed by outputting one of the radar images of the user specified area, and outputting the other radar image for other areas.

Thus, by generating the radar image based on two or more radar antennas, since areas which each radar antenna cannot detect can be mutually compensated, a detection performance of the radar device as a whole can be improved.

In the meantime, for example, when noise is contained in the radar image, or many echoes are displayed in the radar image, a shape of each echo becomes unclear. Therefore, it will be necessary to perform suitable signal processing to the echo signals.

The noise displayed in the radar image is removable or reducible, for example, by performing particular noise removal processing (i.e., processing which suppresses a signal level). However, there may be a possibility that signals necessary for the user are suppressed as well by the signal level suppression.

The echo shape may be clearly obtained if contours of the echoes are extracted. However, when extracting the echo contours in an area where only few echoes exist, other than the echo contours disappear, and therefore, the echoes per se will be undistinguishable.

Thus, the signal processing to the echo signals is desirable to carry out only to the necessary area.

### Summary of the Invention

The present invention is made in view of the above situation, and provides a sensor image display device which can acquire exact information corresponding to a location, by performing signal processing only to a necessary area.

According to one aspect of the invention, a sensor image display device is provided, which includes a display unit configured to display a sensor image generated based on a signal acquired by a sensor, a selection user interface for allowing a user to select a partial area from an area where the sensor image is displayed, and a sensor image generator for generating the sensor image by performing different signal processing for the selected area and one or more areas other than the selected area.

Therefore, exact information corresponding to a location can be acquired by applying different signal processing to the selected partial area.

The selection user interface may allow the user to instruct at least one of an operation of changing a size of the selected area and an operation of moving the selected area.

Therefore, the user can cause the selected area to easily follow the change of the area which needs signal processing.

The selection user interface may allow the user to instruct an operation of moving a pointer displayed on the display unit, and to instruct at least one of the operation of changing the size of the selected area and the operation of moving the selected area is performed by a drug operation using the pointer.

Therefore, the user can change the selected area by an intuitive operation. Moreover, the selected area can be quickly changed, as compared with a conventional configuration, for example, in which a selected area is changed by a numerical input.

The selected area may be rectangular in shape.

Therefore, for example, the user can specify a vertical size and/or a horizontal size of a screen image to form the selected area having a desired size.

The sensor image generator may extract a sensor image contour of only in either the selected area or the one or more areas other than the selected area.

Therefore, for example, it becomes easy to view the shape of a target object by performing the above signal processing to an area where two or more target objects are adjacent to each other. Whereas, for other areas, it can prevent that only the contour is displayed and the target objects thus become undistinguishable.

The sensor image generator may extract only a signal indicative of a moving target object, only in either the selected area or the one or more areas other than the selected area.

Therefore, a target object which is highly necessity to observe (i.e., the moving target object) can be extracted for indication by performing, for example, the above signal processing to the area where two or more target objects are adjacent to each other. On the other hand, other target objects which are not moving can be displayed in the other area(s).

The sensor image generator may perform scan-to-scan correlation processing only in either the selected area or the one or more areas other than the selected area.

Therefore, noise can be suppressed by performing the scan-to-scan correlation processing to, for example, an area where many noises exist. On the other hand, target objects which move at high speed can be displayed (if there is any) in the other area(s).

The sensor image generator may differentiate an adjustment level of the signal for the selected area and the one or more areas other than the selected area.

Therefore, noises can be eliminated (or making them undistinguishable) by setting a predetermined adjustment level, for example, in an area where noises with small signal levels occur. On the other hand, target objects with small signal levels can be displayed in the other area(s).

The display unit may display the sensor image and another image so that the sensor image is overlapped with the another image. The display unit may display an image where the sensor image is overlapped with the another image in either the selected area or the one or more areas other than the selected area, while displaying the sensor image without displaying the another image in the one or more areas other than the selected area.

Therefore, if symbols and lines are finely indicated in the another image (for example, a map or a nautical chart), the user can easily check a position and a shape of a target object by performing processing which displays only the sensor image in the finely indicated area (i.e., an area where the sensor image becomes hard to see when superimposed).

Two or more areas may be selected as the selected area.

Therefore, signal processing can be differentiated between the two or more areas which may be separated from each other and the other area(s). In other words, a sensor image display device which can display various situations can be achieved.

When a scale or an orientation of the sensor image is changed, at least either one of a position and a shape of the selected area may be changed corresponding to the scale change or the orientation change.

Therefore, even when the sensor image is changed in scale or orientation, time and effort to again set the selected area can be reduce.

The sensor image may be generated based on a signal acquired by a single sensor.

Therefore, different signal processing are performed to the signals acquired from the single sensor, and these processes results can be compared.

According to another aspect of the invention, a radar device is provided. The radar device includes any one of the sensor image display devices, and a radar antenna for acquiring the echo signal for generating the radar image as the sensor image.

Therefore, a radar device which demonstrates the above effects of the sensor image display device can be achieved.

### Brief Description of the Drawings

The present disclosure is illustrated by way of example and not by way of limitation in the figures of the accompanying drawings, in which the like reference numerals indicate like elements and in which:

Fig. 1 is a block diagram of a radar device according to one embodiment of the present invention;

Figs. 2A and 2B are views showing screen images of a display unit when moving a selection window;

Figs. 3A and 3B are views showing another example of the screen images of the display unit when moving the selection window;

Figs. 4A and 4B are views showing screen images of the display unit when enlarging the selection window;

Figs. 5A and 5B are views showing screen images of the display unit when changing a scale of a radar image;

Figs. 6A and 6B are views showing screen images of a display unit according to a first modification of the embodiment that can display a nautical chart and a radar image so that the radar image is superimposed on the nautical chart; and

Fig. 7 is a block diagram of a radar device according to a second modification of the embodiment.

### Detailed Description

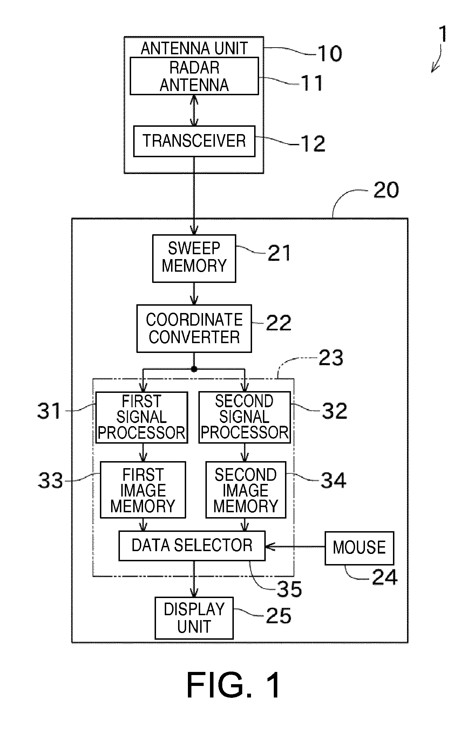

Next, one embodiment of the present invention is described with reference to the accompanying drawings. Fig. 1 is a block diagram of a radar device 1 according to this embodiment. The radar device 1 is a ship radar device which is provided to a ship, such as a fishing boat, and is primarily used for detection of target objects, such as other ships.

As shown in Fig. 1, the radar device 1 includes an antenna unit 10 and a radar indicator 20 (a sensor image display device in the claims).

The antenna unit 10 is attached to the ship concerned at a predetermined suitable location. The antenna unit 10 is provided with a radar antenna 11 (a sensor in the claims) and a transceiver 12.

The radar antenna 11 transmits a pulse-shaped radio wave with sharp directivity, and receives a corresponding echo (reflection wave) from a target object. Thus, a distance "r" from the ship to the target object can be calculated based on a measurement of a time after the radar antenna 11 transmits the pulse-shaped radio wave until it receives the corresponding echo. Moreover, the radar antenna 11 is rotatable over 360° in a horizontal plane, and therefore, it repeats a transmission and a reception of the radio wave, while changing a transmitting direction of the pulse-shaped radio wave (i.e., changing a horizontal angle of the radar antenna 11). Thus, the radar device 1 is able to detect target objects in the horizontal plane, 360° around the ship. In the following description, the term a "sweep" as used herein may be referred to as an operation between a transmission of one pulse-shaped radio wave and a subsequent transmission of another pulse-shaped radio wave.

Note that, instead of the pulse radar described above, the radar device 1 may also be applied to CW (continuous wave) radar and pulse-doppler radar. Moreover, the radar device 1 may also have such a configuration that the radar antenna does not rotate. For example, a radar device having antenna elements in all directions and a radar device which detects only a specific direction (e.g., only front) do not need to rotate the radar antenna.

The transceiver 12 samples the echo signal received by the radar antenna 11, and outputs a digitized echo signal (reception data) to the radar indicator 20.

The radar indicator 20 includes a sweep memory 21, a coordinate converter 22, a radar image generator 23 (a sensor image generator in the claims), a mouse 24, and a display unit 25.

The sweep memory 21 is a buffer memory which can store the reception data in real time for one sweep. The sweep memory 21 stores the reception data sampled during one sweep in a chronological order. Thus, based on a read-out address when reading out the reception data from the sweep memory 21, a distance "r" to the target object (echo source) corresponding to the reception data can be calculated. An azimuth sensor (not illustrated) is attached to the radar antenna 11, and a detection result of the azimuth sensor (e.g., a terrestrial reference azimuth θ of the target object) is also transmitted to the sweep memory 21. Therefore, when reading the reception data from the sweep memory 21, a position of the target object corresponding to the reception data can be obtained by polar coordinates (r, θ).

The coordinate converter 22 converts the position (point) on a sweep line expressed by polar coordinates (r, θ) into a pixel position (X, Y) in an XY orthogonal coordinate system. The reception data converted into the XY orthogonal coordinate system is outputted to the radar image generator 23.

The radar image generator 23 performs predetermined signal processing based on the reception data inputted from the coordinate converter 22, and, it then generates a radar image (sensor image). As shown in Fig. 1, the radar image generator 23 includes a first signal processor 31, a second signal processor 32, a first image memory 33, a second image memory 34, and a data selector 35. The radar device 1 also includes another user interface, such as one or more operation keys (not illustrated), besides the mouse 24 shown in Fig. 1 and, thus, the user are allowed to perform various operations and instructions to the radar image generator 23.

The first signal processor 31 and the second signal processor 32 can perform various signal processing to the reception data inputted from the coordinate converter 22. The signal processing which the first signal processor 31 and the second signal processor 32 can perform includes contour extraction processing, moving target object extraction processing, gain adjustment processing, and scan-to-scan correlation processing. The first signal processor 31 and the second signal processor 32 selectively perform one of the above signal processing, which is specified by the user via the operation keys or the like, respectively. Here, the user sets such that the first signal processor 31 and the second signal processor 32 perform different signal processing from each other. Note that, the term "performing different signal processing" as used herein also refers, for example, to setting the first signal processor 31 to perform certain signal processing while setting the second signal processor 32 not to perform any signal processing.

The contour extraction processing is to extract only a contour of the echo. For example, performing the contour extraction processing to an area where two or more echoes are located adjacent to each other makes easier for the user to view the shape of the echo. On the other hand, in an area where only few echoes exist, since parts of the echoes other than the contours disappear, the echoes per se may be undistinguishable.

The moving target object extraction processing is to extract only the echo signal indicative of a moving target object based on a chronological transition of the radar image so that the moving target object is discriminated from other stationary target objects. For example, by performing this processing in the area where two or more echoes are located adjacent to each other, an echo which is highly necessary to observe (i.e., the moving target object) can be extracted and displayed.

The gain adjustment processing is to adjust a signal level of the echo signal to be displayed on a display screen according to adjustment level settings. By performing this adjustment, only the echo signal having a signal level higher than the adjustment level settings (e.g., a threshold) can be displayed. Thus, by setting a suitable adjustment level and performing the gain adjustment processing, noises, such as sea surface reflections, can be suppressed. However, by suppressing the signal level, there is a possibility that signals necessary for the user may also be suppressed. Note that the case where the adjustment levels are set different in the first signal processor 31 and the second signal processor 32 also falls under the meanings of the term "performing different signal processing" described above.

The scan-to-scan correlation processing is to obtain a correlation between an echo signal and a past echo signal (for example, the latest signal and a previous signal). Thus, this processing is to suppress signals varying at random with time (i.e., signals having a low correlativity with the previous echo signal), while leaving signals detected stably with time (i.e., signals having a high correlativity with the past signal). For example, echoes indicating other ships, buoys, and lands are signals which are stably detected with time. On the other hand, echoes based on sea surface reflections are signals which vary at random with time. Thus, by performing the above scan-to-scan correlation processing to the echo signals, only the signals based on sea surface reflections can be suppressed. However, if other ships are moving at high speed, echoes therefrom will be detected at different locations for each scan, and it will appear that these signals are not stable. For this reason, when the scan-to-scan correlation processing is performed, the echoes of the high-speed moving target objects will be suppressed.

As described above, these signal processing performed to the echo signals have both advantages and disadvantages, and, therefore, new information necessary for the user may be acquired by carrying out different processing to a specific area from other area(s), rather than performing the same processing throughout the screen image.

The first image memory 33 stores the reception data after the signal processing by the first signal processor 31 as a two-dimensional raster image. The second image memory 34 stores the reception data after the signal processing by the second signal processor 32 as a two-dimensional raster image, similar to the first image memory 33.

As described above, the radar device 1 of this embodiment stores two radar images for which different signal processing are performed to the echo signals from the antenna unit 10 (particularly, the radar antenna 11).

The data selector 35 outputs, from two image data, the radar image stored in the first image memory 33 for the area (pixels) selected by the user, and outputs the radar image stored in the second image memory 34 for other area(s) (pixels). The data selector 35 displays the radar images generated in this way on the display unit 25 which is constituted as a raster scan color display in this embodiment.

Thus, since the different signal processing can be applied to part of the selected area, exact information corresponding to a location can be acquired. Note that, in the following description, "the area selected by the user" may also be simply referred to as "the selected area."

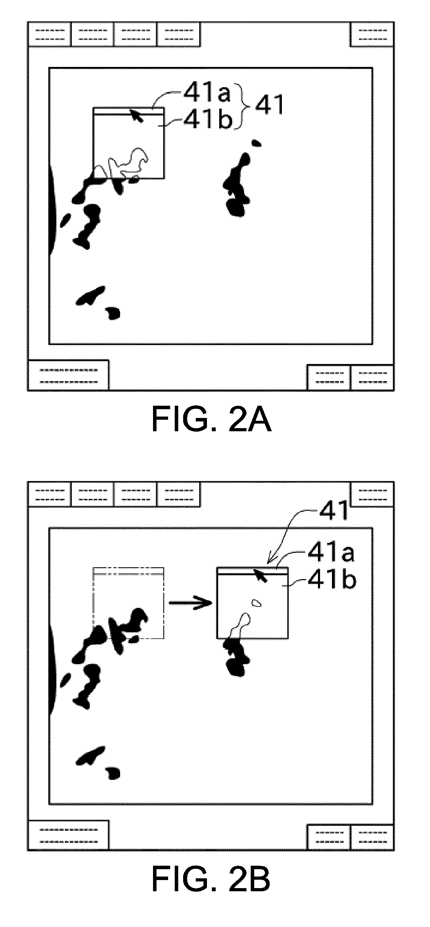

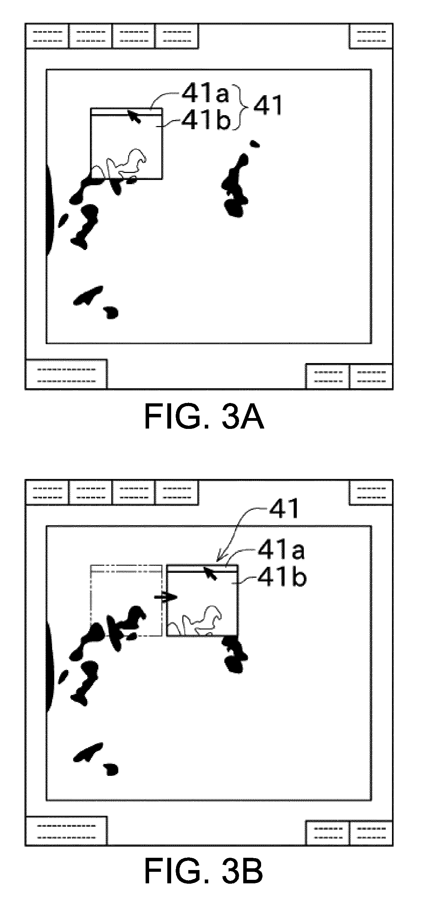

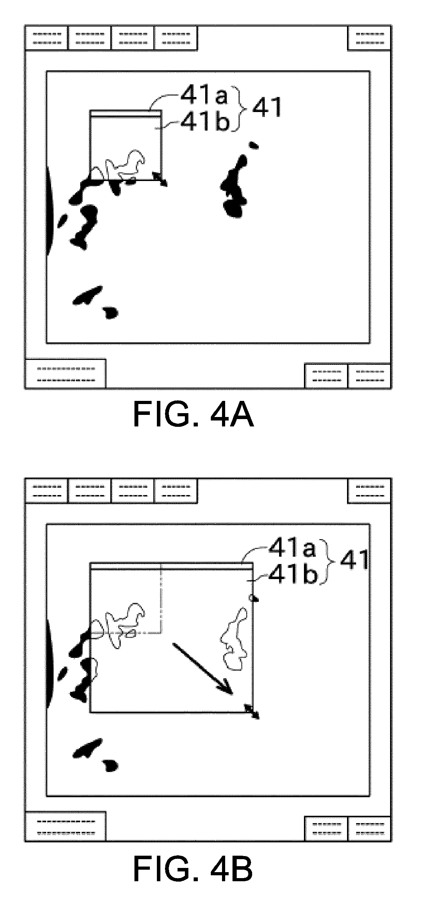

Next, a method of creating and operating the selected area is described. Figs. 2A and 2B are views showing screen images of the display unit 25 when moving a selection window 41. Figs. 3A and 3B are views showing another example of the screen image of the display unit when moving the selection window 41. Figs. 4A and 4B are views showing a screen image of the display unit 25 when enlarging the selection window 41.

When creating the selected area, the user performs a predetermined operation using the operation key(s) (not illustrated) or the like to instruct a creation of the selected area. Then, the user selects an upper left corner and a lower right corner of the selected area by performing a drug operation of the mouse 24 to select a rectangular area from an (entire) area where the radar image is displayed. By this operation, the selection window 41 shown in Fig. 2A is created in the screen image of the display unit 25. Further, the creation of the selection window 41 may also be performed using the operation key(s) or the like by specifying a vertical size and/or a horizontal size of the window. Note that it may also be possible to specify two or more selected areas and to display two or more selection windows 41 on the display unit 25.

In this embodiment, the selection window 41 is comprised of a title part 41a and a window part 41b. The title part 41a is formed along the upper end of the selection window 41, where the name of the selection window is described, for example. The window part 41b is formed below the title part 41a. In this window part 41b, the radar image stored in the second image memory 34 is displayed. On the other hand, the image data stored in the first image memory 33 is displayed in the area outside the selection window 41.

Thus, when the user does not specify the signal processing which the first signal processor 31 performs, but instructs the second signal processor 32 to perform the contour extraction processing, then, as shown in Figs. 2A and 2B, only the contours of the echoes are displayed in the window part 41b, but the entire echoes are displayed in the area other than the selection window 41.

The user may also move, expand, and/or reduce the selection window 41 by operating the mouse 24. Specifically, the user can move the selection window 41 to a predetermined location by dragging the title part 41a of the selection window 41 (see Fig. 2B). It is also possible to move the selection window 41 by performing a suitable setting or operation, while the indication in the selection window 41 remains the same before and after the moving operation (see Figs. 3A and 3B). Thereby, for example, the echo before the contour extraction processing and the echo after the contour extraction processing, which indicate the same area, can be displayed side by side for comparison. The user is also able to change the vertical size of the selection window 41 by dragging the upper end or the lower end of the selection window 41. The user is also able to change the horizontal size of the selection window 41 by dragging the left end or the right end of the selection window 41. The user is also able to change the vertical size and the horizontal direction of the selection window 41 by one operation of dragging a lower corner part of the selection window 41 (see Fig. 4B).

Thus, the user performs the creation and the operation of the selection window 41 to select part of the area where the radar image is displayed. Note that, for example, if the initial size and the initial location of the selection window 41 are set in advance, a desired selected area may be specified by a later user operation.

Therefore, in order to select the predetermined area, it does not require time and effort to input the distance and the azimuth, unlike JP2006-300722A. Further, in this embodiment, intuitive operations are possible, although the user cannot intuitively know which portion of the radar image is indicated by inputted contents in JP2006-300722A.

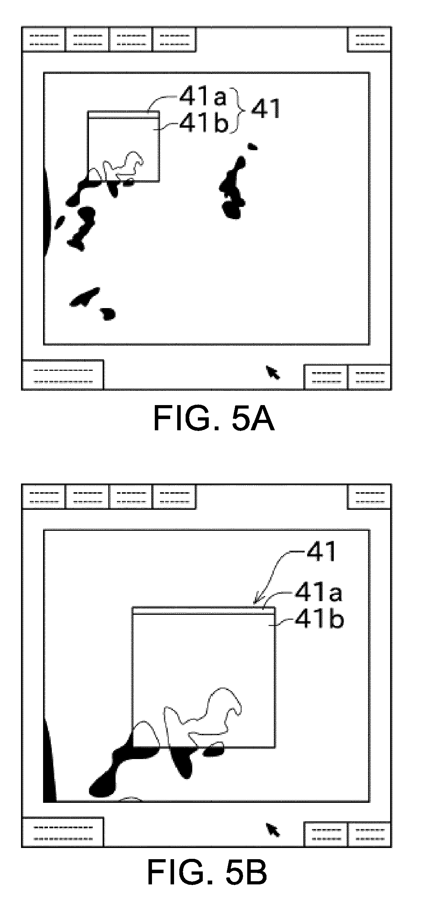

Next, a behavior of the selection window 41 when a scale (range) of the radar device is changed is described with reference to Figs. 5A and 5B. Figs. 5A and 5B are views showing screen images of the display unit 25 when changing the scale of the radar image.

The radar device 1 is able to change the scale. For example, by enlarging the scale, a detailed shape of the echo can be checked by the user. In this embodiment, when the scale of the display area of the radar image is changed, as shown in Figs. 5A and 5B (from Fig. 5A to Fig. 5B), the location and the shape of the selected area changes automatically corresponding to the scale change. Further, in this embodiment, not only when the scale is changed but when the orientation of the radar image changes by turning of the ship, for example, the location of the selected area also changes automatically according to the orientation change.

### FIRST MODIFICATION

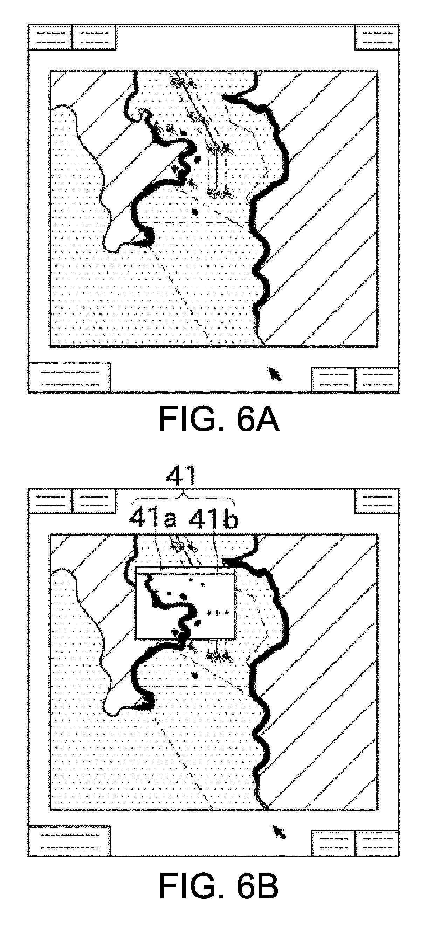

Next, a first modification of the above embodiment is described with reference to Figs. 6A and 6B. Figs. 6A and 6B are views showing screen images of the display unit 25 according to the first modification where a radar image can be displayed so as to be superimposed on a nautical chart. Note that, in the following description regarding this modification and a second modification described later, like reference numerals are given to like components of the above embodiment and, thus, repeating description of the components may be omitted.

In the first modification shown in Figs. 6A and 6B, a radar device is able to receive nautical chart information around the ship from one or more external devices. The radar device can display the received nautical chart and a radar image on the display unit 25 so that the radar image is superimposed on the nautical chart (see Fig. 6A). In Fig. 6A, land is expressed by a hatched area and sea is expressed by a dot area. In this example nautical chart, many buoys are displayed above the central part of the screen image. The radar image is superimposed on the nautical chart when they are displayed.

In this modification, a radar image generator 23 performs processing which extracts echoes having signal levels higher (stronger) than a predetermined value, and makes areas other than the extracted echoes transparent. Thus, the echoes are displayed in an area where the signal levels of the echoes are higher (stronger) than the predetermined value, while the nautical chart is displayed in an area where the signal levels of the echoes are lower (weaker) (or an area where no echo exist).

In this modification, either one of the first signal processor 31 or the second signal processor 32 may perform processing which extracts echoes having signal levels larger than a predetermined value, and colors areas other than the extracted echoes in one color (e.g., monochromate: for example, black in an actual display screen, although white in the drawing), resulting in the area not to be transparent. Thus, the image where the radar image is superimposed on the nautical chart in the selection window 41 is displayed and, at the same time, the radar image can be displayed without displaying the nautical chart outside the selection window 41. Therefore, for example, if the second signal processor 32 is caused to perform the above processing, and the selection window 41 is moved slightly above the central part of the screen image (where there are many buoys and echoes are hard to see), the echoes will be displayed easy to view (see Fig. 6B).

### SECOND MODIFICATION

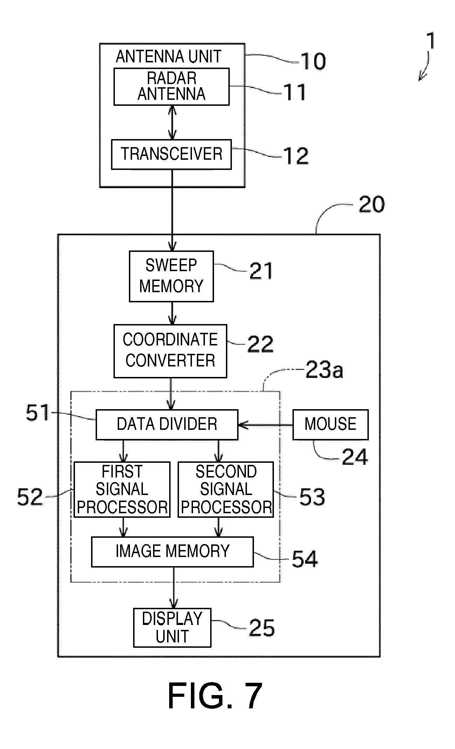

Next, a second modification of the above embodiment is described with reference to Fig. 7. Fig. 7 is a block diagram of another radar device according to the second modification.

The second modification differs from the above embodiment in the configuration of the radar image generator 23. Specifically, a radar image generator 23a of this modification includes a data divider 51, a first signal processor 52, a second signal processor 53, and an image memory 54. An instruction of specifying the selected area using a mouse 24 is outputted to the data divider 51.

The data divider 51 outputs data corresponding to the selected area to the second signal processor 53 among the data received from a coordinate converter 22, and outputs data corresponding to area(s) other than the selected area to the first signal processor 52.

The signal processing described above is performed in the first signal processor 52 and the second signal processor 53. That is, in the above embodiment, the first signal processor 31 and the second signal processor 32 perform signal processing to the entire radar display area, respectively. On the other hand, in this modification, the first signal processor 52 performs signal processing only for area(s) other than the selected area, and the second signal processor 53 performs signal processing only for the selected area. The first signal processor 52 and the second signal processor 53 then output reception data after the signal processing to the image memory 54 to generate one image data (radar image).

Summarizing the above embodiment, the radar indicator 20 includes the display unit 25, the mouse 24, and the radar image generator 23. The display unit 25 displays the radar image generated based on the echo signals acquired through the radar antenna 11. The user is allowed to operate to mouse 24 to select part of the area where the radar image is displayed. The radar image generator 23 performs different signal processing for the selected area which is selected by the user using the mouse 24 and area(s) other than the selected area, and then generates the radar image.

In the above embodiment, the user is able to operate the mouse 24 to expand and reduce the selection window 41 in size, and to change the position of the selection window 41.

In the above embodiment, the signal processing includes the contour extraction processing, the moving target object extraction processing, the gain adjustment processing, and the scan-to-scan correlation processing. Different kinds of the signal processing (also including a case where levels of the signal processing differ) are performed inside and outside the selection window 41.

Although a suitable embodiment and suitable modifications according to the invention are described above, these configurations may also be further modified as follows.

In the above embodiment and modifications, although the radar indicator 20 displays the radar image generated based on the signals acquired from the single radar antenna 11, the radar image may also be generated based on signals acquired from two or more radar antennas.

In the first modification, although the example where the radar image is superimposed on the nautical chart when they are displayed is shown, the nautical chart may be replaced with AIS information, TT information, etc.

The signal processing which the first signal processor 31 and the second signal processor 32 perform may also be other signal processing, as long as different signal processing are performed between the processors. Note that the terms "performing different signal processing" as used herein also refers to a case where the different display scales (i.e., magnifying powers or scales) are used between inside and outside the selection window 41.

The moving and changing in size of the selection window 41 may also be performed by a drug operation of, for example, a trackball, in stead of the mouse 24. The selection window 41 may also be moved and changed the size by an input from the operation key.

In the above embodiment, although the display area of the radar image displayed on the display unit 25 is rectangular, it may also be other shapes, such as circle.

The selection window 41 and the window part 41b is not be limited to a rectangular shape as well, and may also be circular.

Two or more selection windows may also be provided, and different signal processing are performed in each area indicated through the selection windows. For example, a third signal processor may additionally be provided, and a second selection window may be displayed. In this case, an image obtained as a result of signal processing by the third signal processor may be displayed in the second selection window. The number of signal processors and the number of selection windows may be more.

Two or more kinds of signal processing may also be performed in the first signal processor 31 and the second signal processor 32, respectively. For example, the first signal processor 31 performs the contour extraction processing and the scan-to-scan correlation processing, while the second signal processor 32 performs the moving target object extraction processing.

The radar device of the present invention is not limited to the application to the ship radar device, but may also be carried in other movable bodies, such as an airplane. Alternatively, the radar device may be installed in a lighthouse, and it may monitors locations of movable bodies, such as ships. The sensor image display device of the invention may also be implemented as a sonar apparatus, or a fish finder apparatus.

## Claims

1. A sensor image display device, comprising:
a display unit configured to display a sensor image generated based on a signal acquired by a sensor;
a selection user interface for allowing a user to select a partial area from an area where the sensor image is displayed; and
a sensor image generator for generating the sensor image by performing different signal processing for the selected area and one or more areas other than the selected area.

2. The sensor image display device of Claim 1, wherein the selection user interface allows the user to instruct at least one of an operation of changing a size of the selected area and an operation of moving the selected area.

3. The sensor image display device of Claim 2, wherein the selection user interface allows the user to instruct an operation of moving a pointer displayed on the display unit, and to instruct at least one of the operation of changing the size of the selected area and the operation of moving the selected area is performed by a drug operation using the pointer.

4. The sensor image display device of any one of Claims 1 to 3, wherein the sensor image generator extracts a sensor image contour only in either the selected area or the one or more areas other than the selected area.

5. The sensor image display device of any one of Claims 1 to 4, wherein the display unit displays the sensor image and another image so that the sensor image is overlapped with the another image, and
wherein the display unit displays an image where the sensor image is overlapped with the another image in either the selected area or the one or more areas other than the selected area, while displaying the sensor image without displaying the another image in the one or more areas other than the selected area.

6. The sensor image display device of any one of Claims 1 to 5, wherein the selected area is rectangular in shape.

7. The sensor image display device of any one of Claims 1 to 6, wherein the sensor image generator extracts only a signal indicative of a moving target object, only in either the selected area or the one or more areas other than the selected area.

8. The sensor image display device of Claims any one of Claims 1 to 7, wherein the sensor image generator performs scan-to-scan correlation processing only in either the selected area or the one or more areas other than the selected area.

9. The sensor image display device of Claims any one of Claims 1 to 8, wherein the sensor image generator differentiates an adjustment level of the signal for the selected area and the one or more areas other than the selected area.

10. The sensor image display device of any one of Claims 1 to 9, wherein two or more areas are selected as the selected area.

11. The sensor image display device of any one of Claims 1 to 10, wherein when a scale or an orientation of the sensor image is changed, at least either one of a position and a shape of the selected area is changed corresponding to the scale change or the orientation change.

12. The sensor image display device of any one of Claims 1 to 11, wherein the sensor image is generated based on a signal acquired by a single sensor.

13. A radar device, comprising:
a radar antenna for acquiring the echo signal for generating the radar image as the sensor image;
a display unit configured to display a sensor image generated based on a signal acquired by the radar antenna;
a selection user interface for allowing a user to select a partial area from an area where the sensor image is displayed; and
a sensor image generator for generating the sensor image by performing different signal processing for the selected area and one or more areas other than the selected area.

14. A method of displaying a sensor image, comprising:
displaying a sensor image generated based on a signal acquired by a sensor;
selecting a partial area from an area where the sensor image is displayed; and
generating the sensor image by performing different signal processing for the selected area and one or more areas other than the selected area.
